# EUROPÄISCHE PATENTANMELDUNG

(11) **EP 2 636 699 A1**
(43) Veröffentlichungstag der Anmeldung: **11.09.2013**
(21) Anmeldenummer: 12008488.4
(22) Anmeldetag: 20.12.2012
(51) Int. Cl.: C08K 9/00, C08L 97/02, F26B 19/00, B27N 1/00

(54) **Werkstoff enthaltend einen thermoplastischen Kunstoff und Holzpartikel.**

(30) Priorität: 21.12.2011 DE 102011121865
(71) Anmelder: Hagensieker, Martin, 49152 Bad Essen (DE)
(72) Erfinder: Hagensieker, Martin, 49152 Bad Essen (DE)
(74) Vertreter: Deters, Frank

(57) **Zusammenfassung**

Die Erfindung betrifft einen Werkstoff enthaltend einen thermoplastischen Kunststoff und Holzpartikel, wobei die Holzpartikel zur Herstellung des Werkstoffes mit dem thermoplastischen Kunststoff oberhalb der Schmelztemperatur des thermoplastischen Kunststoffes vermischt werden. Die Holzpartikel oder das Holz werden zur Herstellung der Holzpartikel vor der Vermischung mit dem thermoplastischen Kunststoff einer thermischen Vorbehandlung bei einer Temperatur zwischen 170 °C und 250 °C und einer definierten Haltezeit in diesem Temperaturbereich unterzogen, die ausreicht, um das Holzmaterial zunächst vollständig zu trocknen und anschließend die Masse des dergestalt getrockneten Holzmaterials durch die fortgeführte thermische Vorbehandlung um wenigstens 3 % zu reduzieren.

## Beschreibung

Die Erfindung betrifft einen Werkstoff enthaltend einen thermoplastischen Kunststoff und Holzpartikel, wobei die Holzpartikel zur Herstellung des Kunststoffes mit dem thermoplastischen Kunststoff oberhalb der Schmelztemperatur des thermoplastischen Kunststoffs vermischt werden.

Derartige Werkstoffe sind als sogenannte "wood plastic compounds" (WPC) bekannt. Dazu werden herkömmliche thermoplastische Kunststoffe oberhalb der Schmelztemperatur der thermoplastischen Kunststoffe mit den Holzpartikeln gleichmäßig vermischt. Nach Abkühlen der Schmelze wird der Werkstoff erhalten. Als Holzpartikel werden Späne von Laubbäumen oder Nadelhölzern eingesetzt.

Der Erfindung liegt die Aufgabe zugrunde, einen Werkstoff der eingangs genannten Art bereitzustellen, der verbesserte Eigenschaften aufweist.

Die Erfindung wird durch einen Werkstoff der eingangs genannten Art gelöst, bei dem Holzpartikel oder das Holz zur Herstellung der Holzpartikel vor der Vermischung mit dem thermoplastischen Kunststoff einer thermischen Vorbehandlung bei einer Temperatur zwischen 170°C und 250°C und einer definierten Haltezeit in diesem Temperaturbereich unterzogen werden, die ausreicht, um das Holzmaterial zunächst vollständig zu trocknen und anschließend die Masse des dergestalt getrockneten Holzmaterial durch die fortgeführte thermische Vorbehandlung um wenigstens 3%, bevorzugt um wenigstens 5%, zu reduzieren. Während dieser Massereduktion des bereits vollständig trockenen Holzmaterials werden flüchtige Komponenten des Holzes verdampft. Dabei verändert sich die Zellstruktur des Holzes. Die Widerstandsfähigkeit und der Wärmedurchgangskoeffizient der erfindungsgemäßen Werkstoffe mit dergestalt vorbehandelten Holzpartikel sind gegenüber Werkstoffen mit unbehandelten Holzpartikeln oder aber Holzpartikeln aus unbehandeltem Holz deutlich erhöht. Überraschenderweise zeigte sich zudem, dass ein mit derartigen Holzpartikeln hergestellter Werkstoff eine erhöhte Biegefestigkeit sowie eine erhöhte Charpy-Schlagzähigkeit und eine verringerte Wasseraufnahme sowie eine verringerte Quellung aufweisen wie ein WPC-Werkstoff, der identisch herstellt wurde, bei dem die Holzpartikel oder das Holz aus dem die Holzpartikel hergestellt wurden, jedoch nicht der erfindungsgemäß vorgesehenen thermischen Vorbehandlung unterzogen wurden.

Mit Vorteil erfolgt die thermische Vorbehandlung des Holzmaterials oberhalb einer Temperatur von 130°C in einer sauerstoffreduzierten Umgebung. Der Sauerstoffgehalt ist dabei bevorzugt soweit herabgesetzt, dass etwaige unerwünschte Oxidationsprozesse, insbesondere eine Verbrennung des Holzmaterials, unterbunden sind.

Mit Vorteil erfolgt die thermische Vorbehandlung in einer Kammer eines Wärmebehandlungsofens, deren Innentemperatur in einer Aufheizphase um 2°C pro Stunde bis 20°C pro Stunde erhöht wird. Durch eine Steigerung der Innentemperatur in diesem Bereich wird das Holzmaterial zur Herstellung des erfindungsgemäßen Werkstoffes optimal ausgebildet. Mit Vorteil wird die Innentemperatur in einer Abkühlphase unabhängig von der Aufheizphase um 2°C pro Stunde bis 20°C pro Stunde reduziert. Auch hier wird durch eine Abkühlung der Innentemperatur innerhalb dieses Temperaturbereiches eine Optimierung des Holzmaterials zur Herstellung des erfindungsgemäßen Werkstoffes erreicht.

Besonders bevorzugt erfolgt die thermische Vorbehandlung in einer Kammer eines Wärmebehandlungsofens, deren Innentemperatur in einer Haltephase in einem Temperaturbereich konstant gehalten wird, dessen untere und obere Grenze weniger als 10°C auseinander liegen und dessen Mittelwert zwischen 170°C und 250°C liegt. Es hat sich gezeigt, dass das dergestalt behandelte Holzmaterial in diesem Temperaturbereich besonders gute Eigenschaften im späteren erfindungsgemäßen Werkstoff ausbildet.

Besonders bevorzugt ist die Dauer der Haltephase von der Behandlungstemperatur dergestalt abhängig, dass die Dauer y der Haltephase in Stunden größer oder gleich 249,98874 / (1 + 0,000004546 * e0,09026389*T) ist, und besonders bevorzugt größer oder gleich 249,94048 / (1,20539 + 0,000583918 * e0,06205120*T) ist, mit T gleich Temperatur in °C und 180 °C ? T ?240 °C. Bei einer hohen Behandlungstemperatur ist somit lediglich eine kurze Haltephase erforderlich und bei einer geringeren Haltetemperatur eine deutlich längere Haltephase. Die Haltephase darf die durch die vorstehend aufgeführte Gesetzmäßigkeit vorgegebene Mindesthaltedauer nicht unterschreiten, da anderenfalls die aus dem Holzmaterial hergestellten Holzpartikel in dem erfindungsgemäßen Werkstoff die gewünschten positiven Effekte nur unvollständig erbringen.

Besonders bevorzugt haben die Holzpartikel einen Partikeldurchmesser von kleiner als 0,5 mm. Die Eigenschaften des erfindungsgemäßen Werkstoffes sind hierdurch besonders gut.

In einer besonders bevorzugten Ausgestaltung der Erfindung durchläuft die thermische Vorbehandlung des Holzmaterials folgende Schritte:
a) das Holzmaterial wird in einer Kammer eines Wärmebehandlungsofen aufgeheizt;
b) oberhalb einer Temperatur von 100 °C in der Kammer, insbesondere oberhalb von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Holzmaterial wird der Kammer entnommen;
wobei während der Behandlungsschritte a) bis c) permanent Gas aus der Kammer mit einem Unterdruck von 5 bis 100 mbar, insbesondere 10 bis 30 mbar, abgesaugt wird.

Es hat sich gezeigt, dass der erfindungsgemäße Werkstoff hergestellt mit Holzpartikeln aus einem Holzmaterial, das eine derartige thermische Behandlung durchlaufen hat, einen deutlich niedrigeren Wärmedurchgangskoeffizienten aufweist und zudem widerstandsfähiger ist. Das flüssige Wasser erhitzt sich in der Kammer zunächst auf 100°C und geht erst dann in den gasförmigen Zustand über. Die Kammer wird zudem permanent mit einem leichten Unterdruck von etwa 5 bis 100 mbar, insbesondere 10 bis 30 mbar, abgesaugt. Im Inneren der Kammer wird quasi ein statisches Gleichgewicht aus Wassernebel und dampfförmigem Wasser sowie einer sauerstoffarmen Umgebung erzeugt. Hierdurch wird offenbar erreicht, dass weniger Wasser oder Wasserdampf in das Innere des zu behandelnden Holzmaterials eindringt und dort zu einer unerwünschten Quellung der Holzfasern führt. Gleichzeitig wird durch das permanente Absaugen des Neben-/Gasgemisches und Nachführen neuen Wassers, das dann erneut verdampft, erreicht, dass in der Kammer kaum Sauerstoff vorhanden ist. Etwaige unerwünschte Oxidationsprozesse in der Kammer, beispielsweise eine Verbrennung des Holzes, werden hierdurch verhindert. Das Absaugen in der Kammer entstehender Gase durch den leichten Unterdruck bewirkt zudem eine erhebliche Verbesserung des Geruchs des dergestalt behandelten Holzes sowie des später mit dem Holzmaterial hergestellten erfindungsgemäßen Werkstoffes. Die Geruchsverbesserung ist vermutlich darauf zurückzuführen, dass während des Erhitzens des Holzes entstehendes Holzgas permanent durch den Unterdruck abgesaugt wird und sich nicht in der Kammer sowie darüber mittelbar auch im Holzmaterial anreichert. Die im Holzgas enthaltenen Verbindungen weisen üblicherweise einen sehr unangenehmen Geruch auf.

Mit Vorteil wird das während der thermischen Vorbehandlung des Holzmaterials ab Erreichen einer Temperatur von 100°C in der Kammer, insbesondere oberhalb von 130°C, in die Kammer eingespritzte flüssige Wasser regelmäßig in einem zeitlichen Abstand von unter 20 Sekunden, insbesondere unter 10 Sekunden, eingespritzt. Es hat sich herausgestellt, dass die Widerstandsfähigkeit des mit einem dergestalt behandelten Holzmaterials hergestellten erfindungsgemäßen Werkstoffes besonders erhöht ist.

In einer besonders bevorzugten Ausgestaltung der Erfindung wird das in die Kammer eingespritzte flüssige Wasser mit einer Temperatur zwischen 10 und 20°C in die Kammer eingespritzt. Diese Anfangstemperatur sichert, dass ein ausgewogenes Verhältnis zwischen flüssigem Wasser auf dem Holzmaterial und Nebel sowie Wasserdampf in dem Raum um das Holzmaterial herum herrscht. Ein erfindungsgemäß hergestellter Werkstoff mit einem dergestalt vorbehandelten Holzmaterial zeigt sich als besonders widerstandsfähig.

Nachfolgend wird ein Ausführungsbeispiel des erfindungsgemäßen Werkstoffs sowie ein Vergleich mit einem analogen Werkstoff, jedoch hergestellt mit unbehandelten Holzpartikeln, beschrieben.

Es werden jeweils 10 Muster von zwei verschiedenen Probentypen hergestellt, indem die jeweils nachfolgend aufgeführte Mischung auf eine Temperatur knapp oberhalb der Schmelztemperatur des Polypropylens gebracht und verrührt wird. Die flüssige Mischung wird dann zu einem Probenkörper vergossen und abgekühlt. Der erste Probentyp eines WPC-Werkstoffes enthält 28% Polypropylen des Types Sabic PP 510 A sowie 70% getrocknetes aber unbehandeltes Holzmehl des Typs Rettenmaier Holzmehl WK 40/90, 1% Licolub H12 als Gleitmittel sowie 2% Maleinsäureanhydrid-gepropftes Polypropylen (MAPP) Scona TPPP 81112 FA als Haftvermittler. Dieser Probentyp betrifft somit ein herkömmliches WPC-Material.

Der zweite Probentyp wurde identisch hergestellt. Als Holzmehl wurden jedoch erfindungsgemäß hergestellte Holzpartikel eingesetzt, die vor dem Zusatz zum thermoplastischen Kunststoff eine erfindungsgemäß thermische Vorbehandlung durchlaufen haben.

Die Durchschnittswerte der Wasseraufnahme nach einer fünfstündigen Kochquellung gemäß EN 1087-1 sowie der Biegefestigkeit nach ISO 178 und der Charpy-Schlagzähigkeit nach DIN EN ISO 172-1/1 f sind nachfolgend tabellarisch aufgeführt.

| | 5h Kochquellung EN 1087-1 | Biegefestigkeit nach ISO 178 Stützweite: 64 mm Prüfgeschwindigkeit: 2 mm/min | | | Charpy-Schlagzähigkeit DIN EN ISO 179-1/1 f Stützweite: 62 mm |
|---|---|---|---|---|---|
| | Wasser-aufnahme | Biegefestigkeit | Biegefestigkeit | E-Modul | |
| Proben Typ | % | F-max N | N/mm² | N/mm² | KJ/m² |
| 28% Sabic PP 510 A 70% thermisch mod. Holzmehl 1% Licolub H12 2% MAPP Scona TPPP 8112 FA | 3,7 | 126,9 | 77,0 | 8251,1 | 6,1 |
| 28% Sabic PP 510A 70% Rettenmeier Holzmehl BK 40/90 1% Licolub H12 2% MAPP Scona TPPP 8112 FA | 6,8 | 116,3 | 69,5 | 7588 | 5,2 |

Die Wasseraufnahme nach einer fünfstündigen Kochquellung ist beim erfindungsgemäß hergestellten Probentypen nur halb so hoch wie beim Probentypen eines herkömmlichen WPC-Werkstoffes. Die Biegefestigkeit des erfindungsgemäßen Werkstoffes ist deutlich höher als die Biegefestigkeit des herkömmlichen WPC-Werkstoffes. Auch die Charpy-Schlagzähigkeit ist beim erfindungsgemäßen Werkstoff gegenüber dem vergleichbaren herkömmlichen WPC-Werkstoff erhöht. Die Absenkung der Wasseraufnahme, die Erhöhung der Biegefestigkeit und die Steigerung der Schlagzähigkeit sind in der Praxis sehr erwünschte Eigenschaften.

## Patentansprüche

1. Werkstoff enthaltend einen thermoplastischen Kunststoff und Holzpartikel, wobei die Holzpartikel zur Herstellung des Werkstoffes mit dem thermoplastischen Kunststoff oberhalb der Schmelztemperatur des thermoplastischen Kunststoffes vermischt werden, **dadurch gekennzeichnet, dass** die Holzpartikel oder das Holz zur Herstellung der Holzpartikel vor der Vermischung mit dem thermoplastischen Kunststoff einer thermischen Vorbehandlung bei einer Temperatur zwischen 170 °C und 250 °C und einer definierten Haltezeit in diesem Temperaturbereich unterzogen werden, die ausreicht, um das Holzmaterial zunächst vollständig zu trocknen und anschließend die Masse des dergestalt getrockneten Holzmaterials durch die fortgeführte thermische Vorbehandlung um wenigstens 3 % zu reduzieren.

2. Werkstoff gemäß Anspruch 1, **dadurch gekennzeichnet**, das die Haltezeit ausreicht, um das Holzmaterial zunächst vollständig zu trocknen und anschließend die Masse des dergestalt getrockneten Holzmaterials durch die fortgeführte thermische Vorbehandlung um wenigstens 5 % zu reduzieren.

3. Werkstoff gemäß einem der vorhergehenden Ansprüche, **dadurch gekennzeichnet**, das die thermische Vorbehandlung des Holzmaterials oberhalb einer Temperatur von 130 °C in einer sauerstoffreduzierten Umgebung erfolgt.
(kein Brennen des Holzes)

4. Werkstoff gemäß einem der vorhergehenden Ansprüche, **dadurch gekennzeichnet**, das die thermische Vorbehandlung in einer Kammer eines Wärmebehandlungsofen erfolgt, deren Innentemperatur in einer Aufheizphase um 2 °C/h bis 20 °C/h erhöht wird.

5. Werkstoff gemäß einem der vorhergehenden Ansprüche, **dadurch gekennzeichnet**, das die thermische Vorbehandlung in einer Kammer eines Wärmebehandlungsofen erfolgt, deren Innentemperatur in einer Abkühlphase um 2 °C/h bis 20 °C/h reduziert wird.

6. Werkstoff gemäß einem der vorhergehenden Ansprüche, **dadurch gekennzeichnet**, das die thermische Vorbehandlung in einer Kammer eines Wärmebehandlungsofen erfolgt, deren Innentemperatur in einer Haltephase in einem Temperaturbereich konstant gehalten wird, dessen untere und oberere Grenze weniger als 10 °C auseinanderliegt und dessen Mittelwert zwischen 170 °C und 250 °C liegt.

7. Werkstoff gemäß Anspruch 6, **dadurch gekennzeichnet**, das die Dauer der Haltephase von der Behandlungstemperatur dergestalt abhängig ist, dass die Dauer y der Haltephase in Stunden größer oder gleich 249,98874 / (1 + 0,000004546 * e^{0,09026389*T}) ist , insbesondere größer oder gleich 249,94048 / (1,20539 + 0,000583918 * e^{0,06205120*T}) ist, mit T gleich Temperatur in °C und 180 °C ≤ T ≥240 °C.

8. Werkstoff gemäß einem der vorhergehenden Ansprüche, **dadurch gekennzeichnet**, das die Holzpartikel einen Partikeldurchmesser von kleiner als 0,5 mm aufweisen.

9. Werkstoff gemäß einem der vorhergehenden Ansprüche, **dadurch gekennzeichnet**, das die thermische Vorbehandlung des Holzmaterials folgende Schritte durchläuft:
a) das Holzmaterial wird in einer Kammer eines Wärmebehandlungsofen aufgeheizt;
b) oberhalb einer Temperatur von 100 °C in der Kammer, insbesondere oberhalb von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Holzmaterial wird der Kammer entnommen;
wobei während der Behandlungsschritte a) bis c) permanent Gas aus der Kammer mit einem Unterdruck von 5 bis 100 mbar, insbesondere 10 bis 30 mbar, abgesaugt wird.

10. Werkstoff gemäß Anspruch 9, **dadurch gekennzeichnet**, das während der thermischen Vorbehandlung des Holzmaterials oberhalb einer Temperatur von 100 °C in der Kammer, insbesondere oberhalb von 130 °C, in die Kammer eingespritzte flüssige Wasser regelmäßig in einem zeitlichen Abstand von unter 20 Sekunden, insbesondere unter 10 Sekunden, eingespritzt wird.

11. Werkstoff gemäß einem der Ansprüche 9 oder 10, **dadurch gekennzeichnet**, das das oberhalb einer Temperatur von 100 °C in die Kammer, insbesondere oberhalb von 130 °C, eingespritzte flüssige Wasser mit einer Temperatur zwischen 10 und 20 °C in die Kammer eingespritzt wird.

12. Werkstoff gemäß einem der vorhergehenden Ansprüche, **dadurch gekennzeichnet**, das der Anteil an Holzpartikeln gößer oder gleich 60 % beträgt.

13. Gegenstand enthaltend einen Werkstoff nach einem der vorhergehenden Ansprüche.
